# EUROPEAN PATENT SPECIFICATION

(11) **EP 4 230 488 B1**
(45) Date of publication and mention of the grant of the patent: **28.08.2024**
(21) Application number: 21961784.2
(22) Date of filing: 28.10.2021
(51) Int. Cl.: B60T 15/02, B61H 13/30, B60T 8/18

(54) **RELAY VALVE**
RELAISVENTIL
VANNE-RELAIS

(43) Date of publication of application: 23.08.2023
(73) Proprietor: Meishan CRRC Brake Science&Technologyco., Ltd, Meishan, Sichuan 620000 (CN)
(72) Inventor: SHEN, Yanfei, Meishan, Sichuan 620000 (CN); QUAN, Qiong, Meishan, Sichuan 620000 (CN); WEI, Xueli, Meishan, Sichuan 620000 (CN); SHAO, Xianglan, Meishan, Sichuan 620000 (CN); LI, Jing, Meishan, Sichuan 620000 (CN); XIAO, Chen, Meishan, Sichuan 620000 (CN); OU, Dongfang, Meishan, Sichuan 620000 (CN); LI, Qiaoyin, Meishan, Sichuan 620000 (CN); LIU, Baohua, Meishan, Sichuan 620000 (CN); XIAO, Weiyuan, Meishan, Sichuan 620000 (CN); LIU, Yi, Meishan, Sichuan 620000 (CN); YANG, Jianping, Meishan, Sichuan 620000 (CN); SONG, Zhiyong, Meishan, Sichuan 620000 (CN); WANG, Kaien, Meishan, Sichuan 620000 (CN)
(74) Representative: Ipside
(86) International application number: PCT/CN2021/126913
(87) International publication number: WO 2023/070416

(56) References cited:
- CH-A5- 559 647
- CN-A- 1 191 189
- CN-A- 101 992 764
- CN-A- 103 043 075
- CN-A- 104 309 602
- CN-A- 105 216 774
- CN-A- 106 585 660
- CN-A- 106 585 660
- CN-A- 107 499 300
- CN-A- 109 382 267
- CN-A- 111 762 142
- CN-U- 202 054 032
- CN-U- 203 727 354
- CN-U- 203 727 354
- CN-U- 206 254 997
- GB-A- 712 775
- GB-A- 712 775
- US-A- 3 265 448
- US-A- 5 340 203
- US-A- 5 350 222

## Description

### Technical Field

The present invention relates to the technical field of empty and loaded railway vehicles, in particular to a relay valve.

### Background of the Invention

In order to make the running vehicle stop securely, the braking system of rolling stock usually needs to distribute the braking force according to the vehicle load. Excessive braking force will cause the vehicle to slide and cause wheel set abrasion. Too small braking force will lead to driving safety incidents.

At present, in the braking system of domestic railway freight cars, vehicle loads are generally measured indirectly, and a pressure limiting valve is provided to distribute the braking force, in order to achieve the purposes of reliable speed regulation and parking.

Due to the relatively poor accuracy of indirect measurement of vehicle load, the higher accuracy of vehicle load measurement is direct weighing. After direct weighing, the air pressure matching the vehicle load is output. This air pressure is used to control the braking force, so as to improve the control accuracy of brake cylinder pressure, prevent vehicle sliding and insufficient braking force, and ensure the railway safety. Document CN 106 585 660 A discloses a relay valve according to the state of the art and comprising a valve body, a C piston assembly, a Cv piston assembly, a weight-driven mechanism assembly , a brake cylinder chamber and an auxiliary air cylinder chamber.

### Summary of the Invention

The purpose of the present invention is to provide a relay valve, which solves the problem of poor weight drive feature of the existing relay valve.

The purpose of the present invention is realized through the following technical solutions:
A relay valve, comprising a valve body, wherein the valve body is provided with a main valve body assembly, a C piston assembly, a Cv piston assembly, a weight-driven mechanism assembly, a pre-control chamber, a brake cylinder chamber and an auxiliary air cylinder chamber; the movable main valve body assembly is located at a communication channel between the brake cylinder chamber and the auxiliary air cylinder chamber; the movable C piston assembly is blocked between the brake cylinder chamber and the pre-control chamber; one end of the movable Cv piston assembly blocks the pre-control chamber; one end of the C piston assembly is in contact with the main valve body, and the other end of the C piston assembly is in contact with one end of a balance mechanism; the other end of the Cv piston assembly is in contact with the other end of the balance mechanism.

Furthermore, the main valve body assembly and the C piston assembly are sleeved with each other, and the sleeved part of the main valve body assembly is provided with an air inlet; the air inlet is communicated with a hollow space inside the main valve body assembly, and the hollow space is communicated with an atmospheric channel inside the valve body; the atmospheric channel is communicated with an air outlet on the valve body.

Furthermore, the pre-control chamber comprises a pre-control chamber I and a pre-control chamber II; the pre-control chamber I acts with the C piston assembly, and the pre-control chamber II acts with the Cv piston assembly; the brake cylinder chamber comprises a brake cylinder chamber I and a brake cylinder chamber II, and the brake cylinder chamber I acts with the main valve body assembly; the brake cylinder chamber II acts with the C piston assembly, and the brake cylinder chamber I and the brake cylinder chamber II are communicated by a piston shrinkage cavity.

Furthermore, the main valve body assembly comprises an axially movable main valve stem, and a valve stem reset part is provided between the left end of the main valve stem and the valve body; the middle of the main valve stem is located at the communication channel between the brake cylinder chamber and the auxiliary air cylinder chamber, and the right end of the main valve stem is in contact with the C piston assembly.

Furthermore, the main valve body assembly comprises a main valve seat; the main valve seat is fixed between the brake cylinder chamber and the auxiliary air cylinder chamber, and the middle of the main valve stem is located at a through hole of the main valve seat.

Furthermore, the main valve seat is provided with a radial inlet, and the radial inlet is provided with a filter.

Furthermore, the valve stem reset part is a valve stem reset spring.

Furthermore, the valve body is connected with a bonnet, which clamps the main valve seat in the valve body.

Furthermore, the right end of the main valve stem is provided with an air inlet, and the right end of the main valve stem is sleeved with the C piston assembly; the air inlet is communicated with a hollow space inside the main valve body assembly, and the hollow space is communicated with an atmospheric channel inside the valve body; the atmospheric channel is communicated with an air outlet on the valve body.

Furthermore, the air outlet is a spiral air outlet.

Furthermore, the C piston assembly comprises a release valve stem, and the left end of the release valve stem is fixed with a C piston, and the right end of the release valve stem is sleeved with a jump piston; the release valve stem is provided with a stopper fixedly positioned on the right side of the jump piston; diaphragm plates I are provided between the C piston and a jump spring seat, and diaphragm plates I are provided between the jump piston and a jump spring seat; a jump reset part is provided between the jump piston and the jump spring seat, and the release valve stem, C piston, jump piston, diaphragm plates I and the jump spring seat form a jump chamber, and the jump chamber is communicated with the pre-control chamber; the left side of the C piston is the brake cylinder chamber, and the action area of the jump chamber on the C piston is smaller than that of the jump piston.

Furthermore, the jump chamber is communicated with the pre-control chamber by a piston shrinkage cavity.

Furthermore, the release valve stem is fixed with a small spring seat, and the jump spring seat is fixed with a large spring seat; a jump reset part is provided between the small spring seat and the large spring seat.

Furthermore, the jump reset part is a jump spring.

Furthermore, the stopper is a stop nut, which is connected with the release valve stem.

Furthermore, the release valve stem is fixedly connected with the C piston rod, and the C piston rod is in contact with the balance mechanism.

Furthermore, the Cv piston assembly comprises a Cv piston, and the left end of the Cv piston is in contact with a diaphragm plate II; the diaphragm plate II is located on the diaphragm plate seat, and the pre-control chamber is blocked by the left side of the diaphragm plate II; a Cv reset part is provided between the right end of the Cv piston and the valve body.

Furthermore, the valve body is fixed with a Cv spring seat, and the Cv piston is inserted on the Cv spring seat; a Cv reset part is provided between the Cv piston and the Cv spring seat.

Furthermore, the Cv reset part is a release spring.

Furthermore, the Cv piston is connected with the Cv piston rod, which is in contact with the balance mechanism.

Furthermore, the balance mechanism comprises a balance beam, and the right end of the release valve stem acts with the upper end of the balance beam; the middle of the balance beam is in contact with the fulcrum of a weight-driven mechanism assembly, and the lower end of the balance beam acts with the right end of the Cv piston.

Furthermore, the upper end of the balance beam is connected with the C piston rod through a torsional spring.

Furthermore, the valve body is provided with an empty/load signal chamber, and the weight-driven mechanism assembly consists of a weight-driven piston; the lower end of the weight-driven piston blocks the empty/load signal chamber, and the weight-driven piston is connected with a weight-driven piston rod; a weight-driven reset part is provided between the weight-driven piston and the valve body, and the weight-driven piston rod is connected with a vertically movable regulating block; the regulating block is provided with a fulcrum.

Furthermore, the weight-driven piston rod is connected with a connecting shaft, which is connected with the regulating block.

Furthermore, the weight-driven piston rod is glidingly sleeved with an adjusting nut, and the adjusting nut threaded with an adjustable spring seat; a weight-driven reset part is provided between the adjustable spring seat and the weight-driven piston.

Furthermore, the regulating block is provided on the guide chute arranged vertically.

Furthermore, the weight-driven reset part is a regulating spring.

The beneficial effects of the present invention include better weight drive feature, higher sensitivity, and the brake cylinder pressure changes proportionally with the change of vehicle load.

The main solution of the present invention and further alternatives thereof may be combined freely to form a plurality of solutions, all of which may be adopted and claimed in the present invention; and each alternative can be arbitrarily combined with other compatible alternatives according to the present invention. Multiple combinations are clear to those skilled in the art based on the prior art and the common general knowledge after understanding the solutions of the present invention, all of which are technical solutions to be protected by the present invention and are not exhaustive here.

### Brief description of the Drawings

Fig. 1 is a structural diagram of the appearance of the present invention.
Fig. 2 is a structural diagram of a main valve body assembly of the present invention.
Fig. 3 is a structural diagram of a C piston assembly of the present invention.
Fig. 4 is a structural diagram of a Cv piston assembly of the present invention.
Fig. 5 is a structural front view of a weight-driven mechanism assembly of the present invention.
Fig. 6 is a structural side view of a weight-driven mechanism assembly of the present invention.
Fig. 7 is a structural diagram of the initial position of the present invention.
Fig. 8 is a structural diagram of the jump position of the present invention.
Fig. 9 is a structural diagram of the braking position of the present invention.
Fig. 10 is a structural diagram of the pressure maintaining position of the present invention.
Fig. 11 is a structural diagram of the release position of the present invention.

Where: Cv1 - pre-control chamber I, Cv2 - pre-control chamber II, C1 - brake cylinder chamber I, C2 - brake cylinder chamber II, R - auxiliary air cylinder chamber, T - empty/load signal chamber, EX1 - atmospheric channel I, EX2 - atmospheric channel II.
101 - main valve body, 102 - main valve seat, 103 - main valve stem, 104 - filter, 105 - air outlet, 106 - valve stem reset spring, 107 - bonnet, 108 - seal ring.
201 - piston shrinkage cavity, 202 - C piston, 203 - release valve stem, 204 - small spring seat, 205 - diaphragm plate I, 206 - large spring seat, 207 - jump spring, 208 - stop nut, 209 - jump piston, 210- torsional spring, 211- C piston rod, 212 - balance beam, 213 - jump spring seat, Y - jump chamber.
301 - Cv piston, 302 - release spring, 303 - Cv spring seat, 304 - Cv piston rod, 305 - diaphragm plate II, 306 - diaphragm plate seat.
401 - weight-driven piston rod, 402 - connecting shaft, 403 - regulating block, 404 - adjustable spring seat, 405 - adjusting nut, 406 - guide chute, 407 - weight-driven valve body, 408 - regulating spring, 409 - weight-driven piston, 410 - weight-driven bonnet, 411 - fulcrum.

### Detailed Description of Embodiments

The present invention will be described through the following non-restrictive examples.

### Embodiment 1:

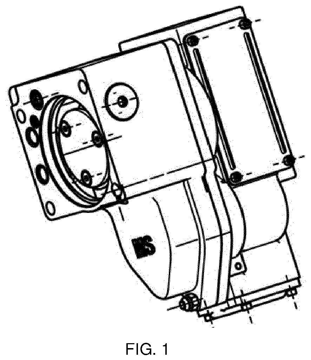

As shown in Fig. 1, a relay valve comprises a valve body, and the valve body comprises a main valve body 101 and a weight-driven valve body 407. The two valve body blocks are fixedly connected by bolts. The main valve body is provided with a main valve body assembly, the pre-control chamber, a brake cylinder chamber and an auxiliary air cylinder chamber R. A weight-driven mechanism assembly is provided in the weight-driven valve body. A C piston assembly and a Cv piston assembly are clamped between the main valve body and the weight-driven valve body.

The pre-control chamber comprises a pre-control chamber I Cv1 and a pre-control chamber II Cv2; the pre-control chamber I Cv1 acts with the C piston assembly, and the pre-control chamber II Cv2 acts with the Cv piston assembly; the brake cylinder chamber comprises a brake cylinder chamber I C1 and a brake cylinder chamber II C2, and the brake cylinder chamber I C1 acts with the main valve body assembly; the brake cylinder chamber II C2 acts with the C piston assembly, and the brake cylinder chamber I C1 and the brake cylinder chamber II C2 are communicated by a piston shrinkage cavity.

The movable main valve body assembly is located at a communication channel between the brake cylinder chamber I and the auxiliary air cylinder chamber R, and the closing or connection between the brake cylinder chamber I and the auxiliary air cylinder chamber can be realized by the movable displacement of the main valve body assembly. The movable C piston assembly is blocked between the brake cylinder chamber II and the pre-control chamber I; one end of the C piston assembly is in contact with the main valve body assembly, and the other end of the C piston assembly is in contact with one end of the balance mechanism; one end of the movable Cv piston assembly blocks the pre-control chamber, and the other end of the Cv piston assembly is in contact with the other end of the balance mechanism.

The main valve body assembly and the C piston assembly are sleeved with each other, and the sleeved part of the main valve body assembly is provided with an air inlet; the air inlet is communicated with a hollow space inside the main valve body assembly, and the hollow space is communicated with an atmospheric channel inside the valve body; the atmospheric channel is communicated with an air outlet on the valve body.

The closing between the brake cylinder chamber I and the auxiliary air cylinder chamber can be realized by the main valve body. Then through the pressure action of brake cylinder chamber II and pre-control chamber I on the C piston assembly, the force of the C piston assembly acts on the main valve body assembly, and the brake cylinder chamber I is communicated with the auxiliary air cylinder chamber by changing the movable displacement of the main valve body assembly. With the rise of the pressure in the pre-control chamber I, the jump of the C piston assembly ends, and then the C piston assembly is acted by the brake cylinder II, making the C piston assembly act on the balance mechanism. The rising pressure of the pre-control chamber II acts on the Cv piston assembly, making the Cv piston assembly also act on the balance mechanism, overcoming the force of the C piston assembly through the balance mechanism, making the C piston assembly act on the main valve body assembly again, and communicating the brake cylinder chamber I and the auxiliary air cylinder chamber.

After braking, the pressure of the brake cylinder chamber and the pre-control chamber is gradually balanced (the pressures of the two chambers are not necessarily the same, but are balanced between the fulcrums of the balance mechanism through the brake chamber force and the pre-control chamber force). Then the forces of the C piston assembly and Cv piston assembly acting on the balance mechanism are balanced. During the release, due to the pressure drop in the pre-control chamber, the C piston assembly plays a dominant role in the balance mechanism. The jacking effect of the C piston assembly on the main valve body assembly decreases, and finally disappears. At the same time, the two diverge from each other, and the sleeve effect between the main valve body assembly and the C piston assembly disappears. The brake cylinder is communicated to the atmosphere to realize the release and pressure relief.

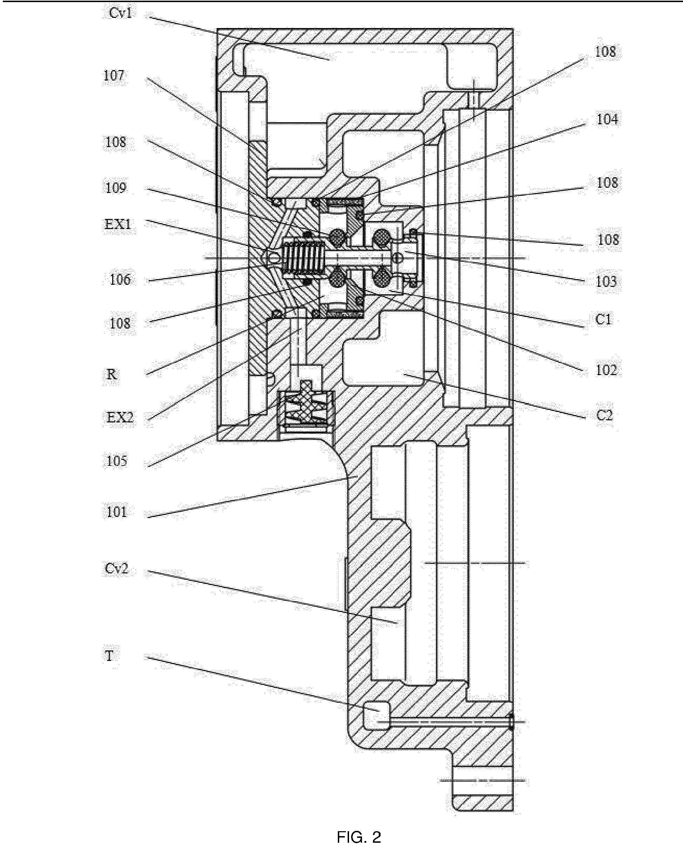

As shown in Fig. 2, the main valve body comprises a main valve seat 102, a main valve stem 103, a filter 104, an air outlet 105, a valve stem reset spring 106, a bonnet 107 and a seal ring 108.

The main valve body 101 is connected with the bonnet 107, which clamps the main valve seat 102 in the main valve body. A seal ring 108 is provided between the bonnet and the main valve body to ensure the tightness of the internal chamber. The main valve seat 102 is fixed between the brake cylinder chamber I and the auxiliary air cylinder chamber R. The middle of the main valve stem 103 is located at a through-hole of the main valve seat 102, that is, the communication channel between the brake cylinder chamber I and the auxiliary air cylinder chamber R. The middle of the main valve stem 103 is provided with a seal ring 108. The main valve stem can move axially. The seal ring in the middle of the main valve stem contacts or disengages from the main valve seat to realize the closing or connection between the brake cylinder chamber I and the auxiliary air cylinder chamber.

The main valve seat 102 is provided with a radial inlet, and the radial inlet is provided with a filter 104 to filter the air entering the auxiliary air cylinder chamber. A seal ring is provided between the main valve seat and the main valve body to realize the sealing between the brake cylinder chamber I and the auxiliary air cylinder chamber R.

A valve stem reset spring 106 is provided between the left end of the main valve stem 103 and the bonnet as the valve stem reset part, and the main valve stem can automatically reset to close the channel through the elastic action of the valve stem reset spring. A seal ring is provided between the left end of the main valve stem and the bonnet to ensure the tightness of the auxiliary air cylinder chamber when the main valve stem is displaced. The right end of the main valve stem 103 is sleeved into the release valve stem, and the main valve stem can overcome the elastic force to connect the channel through the jacking of the release valve stem.

The right end of the main valve stem 103 is provided with an air inlet, which is communicated with the hollow space inside the main valve stem 103; the hollow space is communicated with the atmospheric channel I EX1 on the bonnet, and the atmospheric channel I is communicated with the atmospheric channel II EX2 on the main valve body; the atmospheric channel II is communicated with the air outlet on the main valve body, and the air outlet 105 is a spiral air outlet. The right end of the main valve stem is provided with a seal ring. When the main valve stem is sleeved with the release valve stem, the seal ring blocks the gap between the main valve stem and the release valve stem. When the main valve stem is disengaged from the release valve stem, the brake cylinder I is communicated to the atmosphere for release.

During braking, the pressure in the pre-control chamber I rises, pushing the C piston assembly to jack the main valve stem 103. The pressure air in the auxiliary air cylinder reaches the auxiliary air cylinder chamber R after passing through the powder metallurgy filter, and then reaches the brake cylinder chamber I C1 through the open valve port, and then enters the brake cylinder to form braking. At the same time, the pressure air in the brake cylinder chamber I C1 reaches the brake cylinder chamber II C2 through the throttling shrinkage cavity, forming a proportional relationship with the increased pressure of the pre-control chamber II Cv2 through the balance beam.

During release, the pressure in the pre-control chamber drops, the C piston assembly is disengaged from the main valve stem, and the pressure air in the brake cylinder passes through the air inlet at the right end of the main valve stem, enters the hole in the middle of the valve stem, passes through the radial hole in the bonnet, and is discharged into the atmosphere through the air outlet. At the same time, the pressure air in the brake cylinder chamber II C2 is discharged into the atmosphere along the release path of the brake cylinder chamber I through the throttling shrinkage cavity. The role of the shrinkage cavity is to prevent the C piston assembly from closing the release valve port too quickly, resulting in incomplete pressure relief in the brake cylinder.

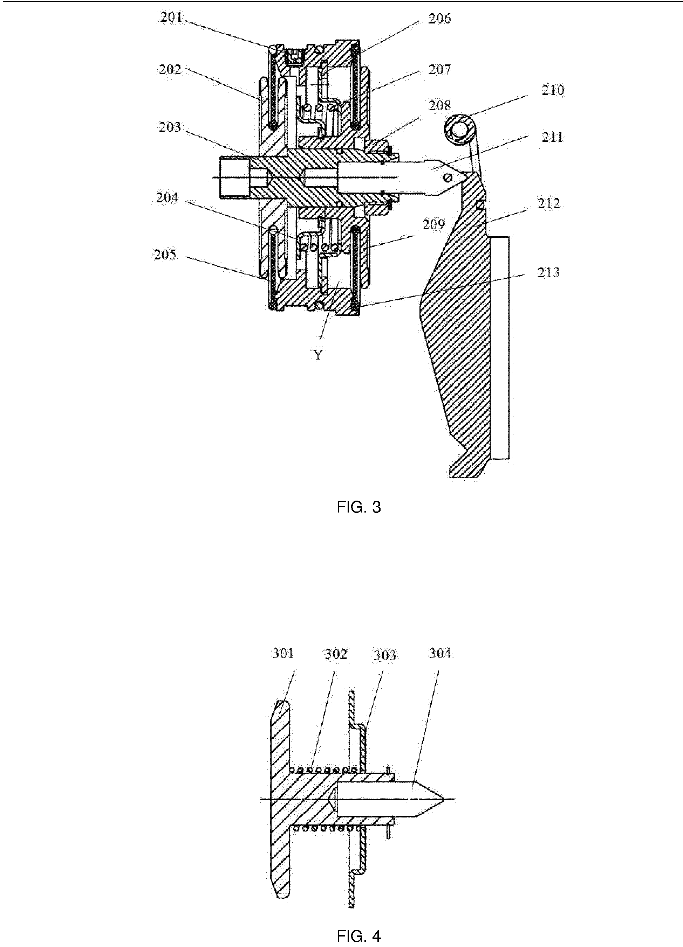

As shown in Fig. 3, the C piston assembly comprises a piston shrinkage cavity 201, a C piston 202, a release valve stem 203, a small spring seat 204, a diaphragm plate I 205, a large spring seat 206, a jump spring 207, a stop nut 208, a jump piston 209, a C piston rod 211, a jump spring seat 213 and a jump chamber Y.

The left end of the release valve stem 203 is fixed with the C piston 202, and the right end of the release valve stem 203 is movably sleeved with the jump piston 209; the release valve stem 203 is fixed with the stop nut 208 on the right side of the jump piston 209 as the stopper; diaphragm plates I 205 are provided between the C piston 202 and the jump spring seat, and diaphragm plates I 205 are provided between the jump piston 209 and the jump spring seat 213. The C piston, jump piston and diaphragm plate I are used to bear pressure. The action position of the release valve stem is changed by the pressure difference on both sides. The stop nut is used to limit the motion position of the jump piston, that is, the jump piston is blocked by sliding rightwards to the stop nut.

The small spring seat 204 and the large spring seat 206 are installed on the jump piston 209, and the jump spring 207 is installed between the small spring seat 204 and the large spring seat 206 as the jump reset part. The jump piston can slide axially relative to the release valve stem, and the jump spring 207 provides an elastic barrier for the relative slide between the release valve stem 203 and the jump piston.

The left end of the release valve stem is sleeved with the right end of the main valve stem, which can realize the actions of jacking, sleeving and disengagement. A seal ring is provided between the left end of the release valve stem and the main valve body to ensure the tightness of the brake cylinder chamber I when the release valve stem is displaced. The right end of the release valve stem 203 is fixedly connected with the C piston rod 211. The C piston rod 211 is in contact with the upper end of the balance beam. The C piston rod extends the release valve stem so that the force of the release valve stem acts on the balance beam.

The release valve stem 203, C piston 202, jump piston 209, diaphragm plate I 205 and jump spring seat 213 form a jump chamber Y. The action area of the jump chamber Y on the C piston 202 is smaller than that of the jump piston 209, that is, the pressure in the jump chamber acts on the jump piston more than on the C piston.

The jump spring seat is fixed between the main valve body and the weight-driven valve body. The jump chamber Y is communicated with the pre-control chamber I by the piston shrinkage cavity 201 on the jump spring seat 213. The left side of the C piston 202 is the brake cylinder chamber II. The pressure in the pre-control chamber I can be transmitted to the jump chamber, and the action position of the release valve stem can be changed by different forces of the jump chamber on the C piston and the jump piston. The pressure of the brake cylinder chamber II acts on the left side of piston C, which can also change the action position of the release valve stem.

The release valve stem transmits the pressure of the brake cylinder chamber II acting on the left side of the C piston, and transmits it to the balance beam through the C piston rod to balance the pressure of the pre-control chamber II on the Cv piston assembly.

Jump function: when the pressure in the pre-control chamber rises, it enters the jump chamber through the shrinkage cavity, pushes the C piston, drives the release valve seat to jack the main valve stem in the main valve body assembly, and the pressure in the auxiliary air cylinder enters the brake cylinder, forming an initial jump. At this time, the balance beam moves away from the edge fulcrum of the regulating block, that is, the pressure in the brake cylinder is not controlled by the weight-driven mechanism.

With the increase of the pressure in the pre-control chamber, when the force acting on the jump piston increases to overcome the force of the jump spring, the jump piston drives the small spring seat to compress the jump spring until the jump piston is blocked by the stop nut, and the jump action ends. At this time, the jump piston and the C piston assembly form rigid connection. Only the pressure in the brake cylinder on the left side of the C piston acts on the piston rod and balances the pressure in the pre-control chamber II through the balance beam.

As shown in Fig. 4, the Cv piston assembly comprises a Cv piston 301, a release spring 302, a Cv spring seat 303, a Cv piston rod 304, a diaphragm plate II 305 and a diaphragm plate seat 306. The left end of the Cv piston 301 is in contact with the diaphragm plate II 305, and the diaphragm plate II 305 is located on diaphragm plate seat 306, which is fixed between the main valve body and the weight-driven valve body. The left side of the diaphragm plate II 305 blocks the pre-control chamber II. The pressure of the pre-control chamber II acts on the diaphragm plate II and then passes to the Cv piston. The right end of the Cv piston 301 is fixedly connected with the Cv piston rod 304, and the Cv piston rod 304 acts on the balance beam.

The weight-driven valve body is fixed with a Cv spring seat 303,and the Cv piston 301 is inserted on the Cv spring seat 303; a release spring 302 is provided between the right end of the Cv piston 301 and the Cv spring seat 303 as the Cv reset part. The release valve is used to maintain the automatic reset of the Cv piston and provide an elastic barrier for the movement of the Cv piston.

The balance mechanism comprises a torsional spring 210 and a balance beam 212, and the C piston rod is connected with the upper end of the balance beam through the torsional spring. The right end of the C piston rod is in contact with the upper end of the balance beam 212, the middle of the balance beam 212 is in contact with the fulcrum of the weight-driven mechanism assembly, and the lower end of the balance beam 212 is in contact with the right end of the Cv piston rod 304. The balanced force transmission between Cv piston and C piston is realized by balancing the forces at both ends.

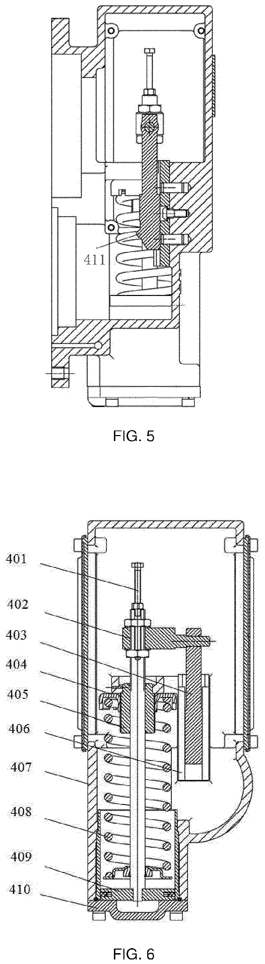

As shown in Figs. 5 and 6, an empty/load signal chamber T is provided between the main valve body and the weight-driven valve body 407. The weight-driven mechanism assembly comprises a weight-driven piston rod 401, a connecting shaft 402, a regulating block 403, an adjustable spring seat 404, an adjusting nut 405, a guide chute 406, theweight-driven valve body 407, a regulating spring 408, a weight-driven piston 409 and a weight-driven bonnet 410.

The bottom of the weight-driven valve body 407 is connected with the weight-driven bonnet 410, on which an empty/load signal chamber is provided. The lower end of the weight-driven piston 409 blocks the empty/load signal chamber T, and the pressure in the empty/load signal chamber acts on the weight-driven piston. The weight-driven piston 409 is connected with the weight-driven piston rod 401, and the weight-driven piston rod 401 is connected with the connecting shaft 402; the weight-driven piston rod 401 is connected with the vertically movable regulating block 403, so as to connect the weight-driven piston, the weight-driven piston rod and the regulating block as a whole and realize synchronous movement.

The weight-driven piston rod 401 is glidingly sleeved with an adjusting nut 405, and the adjusting nut 405 is threaded with an adjustable spring seat 404; a regulating spring 408 is provided between the adjustable spring seat 404 and the weight-driven piston 409 as the weight-driven reset part. The adjustable spring seat can rotate relative to the adjusting nut to realize the position adjustment on the weight-driven piston rod, so as to adjust the tightness of the regulating spring.

The regulating block 403 is provided with a fulcrum, and the regulating block 403 is provided on the guide chute 406 arranged vertically. The regulating block can move vertically. The pressure acting on the weight-driven piston will change to different positions of the regulating block and change the lever fulcrum position of the balance beam.

In the empty state, the pressure from the sensing valve enters the lower part of the weight-driven piston through the weight-driven bonnet, but it is not enough to push the weight-driven piston to move. The fulcrum does not change, and the output is the empty pressure. When the signal pressure is enough to push the weight-driven piston to move, the fulcrum position changes, and the pressure in the brake cylinder also changes therewith.

The working principle of the present invention is as follows.

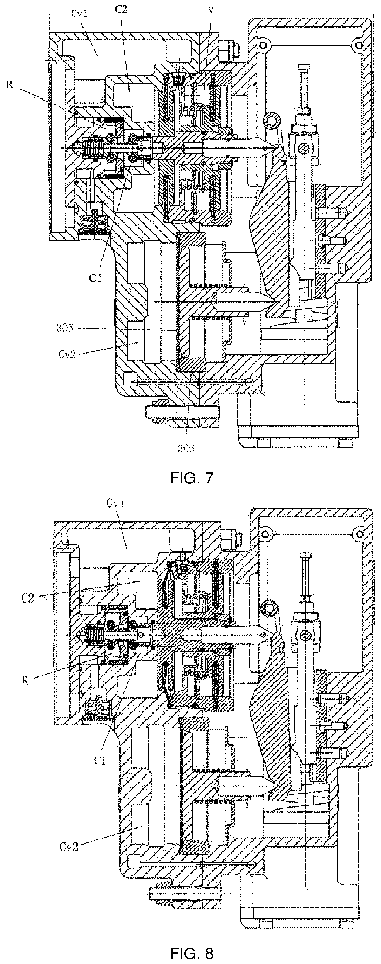

### As shown in Fig. 7, initial position (release position):

All working parts are in the initial position. The intake valve is closed under the action of compression spring to cut off the passage between the auxiliary air cylinder and the brake cylinder I. The balance beam is mechanically connected to the C piston rod and is kept disengaged from the edge fulcrum of the regulating block under the action of the torsional spring.

The pressure from the auxiliary air cylinder is applied to the auxiliary air cylinder chamber R on the left, and the load-related control pressure is applied to the weight-driven piston. All working parts are in the initial position, and the fulcrum position of the weight-driven mechanism is proportional to the vehicle mass.

### As shown in Fig. 8, jump position:

When the brake starts, the pressure entering the brake cylinder must overcome the friction of the piston cylinder wall of the brake cylinder, the inertia of the piston return spring and the brake device, and then is applied to the brake shoe to generate the braking force.

The jump device can increase the pressure in the brake cylinder quickly.

The pre-control pressure flows to the pre-control chamber I Cv1 through an orifice, and then flows to the jump chamber Y through the throttling shrinkage cavity, pushing the C piston to move left, overcoming the resistance of the main valve stem spring, jacking the main valve stem, and the compressed air from the auxiliary air cylinder chamber R flows rapidly into the brake cylinder chamber I C1, and slowly flows to the brake cylinder chamber II C2 on the left of the C piston through the main valve shrinkage cavity. Since the weight-driven device is unavailable at this stage, the opening of the inlet valve is independent of the load.

When the pressure in the pre-control chamber rises enough to compress the jump spring, the jump piston moves to the right and contacts the stop nut, and the jump action ends. The rising pressure of the brake cylinder chamber I enters the brake cylinder chamber II through the shrinkage cavity, that is, the left side of the C piston, pushes the C piston, release valve stem, and the C piston rod to move to the right, and drives the balance beam to contact the edge fulcrum of the regulating block to form a fulcrum. The weight-driven device acts, and meanwhile the Cv piston moves to the right under the pressure of the pre-control chamber II to resist the force generated by the brake cylinder.

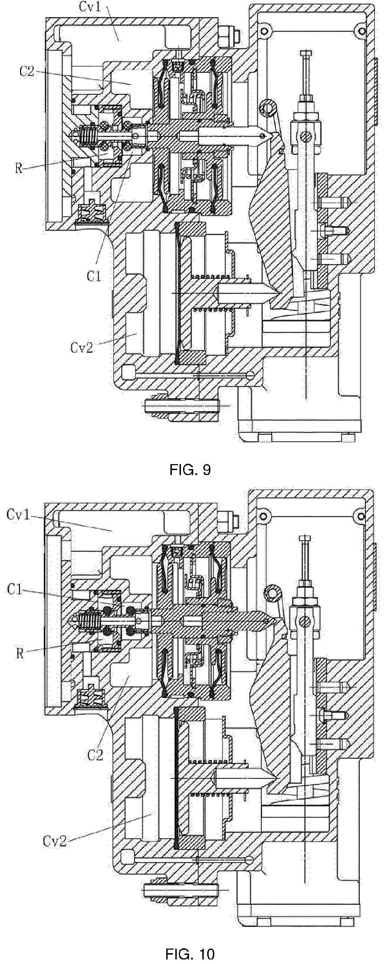

### As shown in Fig. 9, braking position:

The rising pressure of the pre-control chamber causes the Cv piston to move to the right, and the balance beam rotates around the edge fulcrum of the regulating block to resist the effect of the pressure in the brake cylinder chamber II on the C piston. The balance beam drives the C piston rod, release valve stem and main valve stem, thus opening the inlet valve. The compressed air from the auxiliary air cylinder chamber R flows into the brake cylinder chamber I again, and reaches the brake cylinder chamber II through the throttling shrinkage cavity. The pressure of the brake cylinder chamber II increases.

### As shown in Fig. 10, pressure maintaining position:

After each braking process is completed, the intake valve will turn to the pressure maintaining position. The pressure of flowing into the brake cylinder chamber II also increases at the C piston. Once the pressure in the pre-control chamber rises, the pressure in the brake cylinder chamber reaches a value, which keeps the balance beam in the balance state corresponding to the pressure maintaining position, and the inlet valve and exhaust valve are closed.

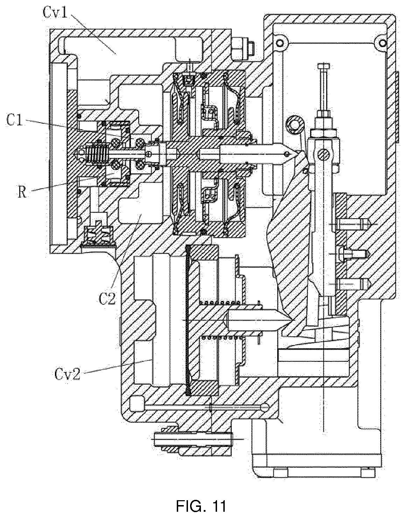

### As shown in Fig. 11, release position:

The relay valve is activated to release by reducing the pre-control pressure.

As the pressure in the pre-control chamber decreases, the torque generated by the C piston dominates the balance beam. The C piston pushes the balance beam to rotate towards the edge of the regulating block, and meanwhile pushes the release valve stem and the C piston rod to move to the right. The pressure in the brake cylinder chamber I flows to the main bonnet through the central hole of the main valve stem, and is discharged into the atmosphere through the atmospheric channel I EX1 on the main bonnet, the atmospheric channel II EX2 on the main valve body, and the spiral air outlet.

When the pressure in the pre-control chamber is reduced, once the brake cylinder has been fully vented, the pressure in the brake cylinder chamber reaches a value at which the balance of the weight-driven device is restored, and the exhaust valve will return to the pressure maintaining position again. Once the relay valve is fully released, the pre-control pressure is fully released to zero, and the brake cylinder is completely vented in this way. All working parts are restored to the positions as shown in Fig. 7.

The aforementioned basic example of the present invention and its further selection examples can be freely combined to form multiple embodiments, which can be adopted and claimed by the present invention. In the solutions of the present invention, each selection example can be arbitrarily combined with any other basic example and selection example.

All above are only preferred embodiments of the present invention, which do not limit the scope of the present invention. All alterations, equivalent replacements and improvements, without departing from the spirit and principle of the present invention, shall fall into the protection scope of the present invention.

## Claims

1. A relay valve, comprising a valve body, wherein the valve body is provided with a main valve body assembly, a C piston assembly, a Cv piston assembly, a weight-driven mechanism assembly, a pre-control chamber, a brake cylinder chamber and an auxiliary air cylinder chamber (R); **characterised by** a pre-control chamber, the movable main valve body assembly being located at a communication channel between the brake cylinder chamber and the auxiliary air cylinder chamber (R); the movable C piston assembly being blocked between the brake cylinder chamber and the pre-control chamber; one end of the movable Cv piston assembly blocking the pre-control chamber; one end of the C piston assembly being in contact with the main valve body, and the other end of the C piston assembly being in contact with one end of a balance mechanism; the other end of the Cv piston assembly being in contact with the other end of the balance mechanism.

2. The relay valve according to claim 1, wherein the main valve body assembly and the C piston assembly are sleeved with each other, and the sleeved part of the main valve body assembly is provided with an air inlet; the air inlet is communicated with a hollow space inside the main valve body assembly, and the hollow space is communicated with an atmospheric channel inside the valve body; the atmospheric channel is communicated with an air outlet on the valve body.

3. The relay valve according to claim 1 or 2, wherein the main valve body assembly comprises an axially movable main valve stem (103), and a valve stem reset part is provided between the left end of the main valve stem (103) and the valve body; the middle of the main valve stem (103) is located at the communication channel between the brake cylinder chamber and the auxiliary air cylinder chamber (R), and the right end of the main valve stem (103) is in contact with the C piston assembly.

4. The relay valve according to claim 3, wherein the right end of the main valve stem (103) is provided with an air inlet, and the right end of the main valve stem (103) is sleeved with the C piston assembly; the air inlet is communicated with a hollow space inside the main valve stem (103), and the hollow space is communicated with an atmospheric channel inside the valve body; the atmospheric channel is communicated with an air outlet (105) on the valve body.

5. The relay valve according to claim 1, wherein the C piston assembly comprises a release valve stem (203), and the left end of the release valve stem (203) is fixed with a C piston (202), and the right end of the release valve stem (203) is sleeved with a jump piston (209); the release valve stem (203) is provided with a stopper fixedly positioned on the right side of the jump piston (209); diaphragm plates I (205) are provided between the C piston (202) and a jump spring seat (213), and diaphragm plates I (205) are provided between the jump piston (209) and a jump spring seat (213); a jump reset part is provided between the jump piston (209) and the jump spring seat (213), and the release valve stem (203), C piston (202), jump piston (209), diaphragm plates I (205) and the jump spring seat (213) form a jump chamber (Y), and the jump chamber (Y) is communicated with the pre-control chamber; the left side of the C piston (202) is the brake cylinder chamber, and the action area of the jump chamber (Y) on the C piston (202) is smaller than that of the jump piston (209).

6. The relay valve according to claim 1, wherein the Cv piston assembly comprises a Cv piston (301), and the left end of the Cv piston (301) is in contact with a diaphragm plate II (305); the diaphragm plate II (305) is located on the diaphragm plate seat (306), and the pre-control chamber is blocked by the left side of the diaphragm plate II (305); a Cv reset part is provided between the right end of the Cv piston (301) and the valve body.

7. The relay valve according to claim 1, wherein the balance mechanism comprises a balance beam (212), and the right end of the release valve stem (203) acts with the upper end of the balance beam (212); the middle of the balance beam (212) is in contact with the fulcrum of a weight-driven mechanism assembly, and the lower end of the balance beam (212) acts with the right end of the Cv piston (301).

8. The relay valve according to claim 7, wherein the upper end of the balance beam (212) is connected with the release valve stem (203) by a torsional spring (210).

9. The relay valve according to claim 1, wherein the valve body is provided with an empty/load signal chamber (T), and the weight-driven mechanism assembly consists of a weight-driven piston (409); the lower end of the weight-driven piston (409) blocks the empty/load signal chamber (T), and the weight-driven piston (409) is connected with a weight-driven piston rod (401); a weight-driven reset part is provided between the weight-driven piston (409) and the valve body, and the weight-driven piston rod (401) is connected with a vertically movable regulating block (403); the regulating block (403) is provided with a fulcrum.

10. The relay valve according to claim 9, wherein the weight-driven piston rod (401) is glidingly sleeved with an adjusting nut (405), and the adjusting nut (405) is threaded with an adjustable spring seat (404); a weight-driven reset part is provided between the adjustable spring seat (404) and the weight-driven piston (409).

## Patentansprüche

1. Relaisventil, das einen Ventilkörper umfasst, wobei der Ventilkörper mit einer Hauptventilkörperbaugruppe, einer C-Kolbenbaugruppe, einer Cv-Kolbenbaugruppe, einer gewichtsgetriebenen Mechanismusbaugruppe, einer Vorsteuerkammer, einer Bremszylinderkammer und einer Hilfsluftzylinderkammer (R) versehen ist; **gekennzeichnet durch** eine Vorsteuerkammer, wobei sich die bewegliche Hauptventilkörperbaugruppe an einem Kommunikationskanal zwischen der Bremszylinderkammer und der Hilfsluftzylinderkammer (R) befindet; wobei die bewegliche C-Kolbenbaugruppe zwischen der Bremszylinderkammer und der Vorsteuerkammer blockiert ist; wobei ein Ende der beweglichen Cv-Kolbenbaugruppe die Vorsteuerkammer blockiert; wobei ein Ende der C-Kolbenbaugruppe mit dem Hauptventilkörper in Kontakt steht und das andere Ende der C-Kolbenbaugruppe mit einem Ende eines Waagemechanismus in Kontakt steht; wobei das andere Ende der Cv-Kolbenbaugruppe mit dem anderen Ende des Waagemechanismus in Kontakt steht.

2. Relaisventil nach Anspruch 1, wobei die Hauptventilkörperbaugruppe und die C-Kolbenbaugruppe miteinander vermufft sind und der vermuffte Teil der Hauptventilkörperbaugruppe mit einem Lufteinlass versehen ist; der Lufteinlass mit einem Hohlraum innerhalb der Hauptventilkörperbaugruppe in Kommunikation gesetzt ist und der Hohlraum mit einem atmosphärischen Kanal innerhalb des Ventilkörpers in Kommunikation gesetzt ist; der atmosphärische Kanal mit einem Luftauslass am Ventilkörper in Kommunikation gesetzt ist.

3. Relaisventil nach Anspruch 1 oder 2, wobei die Hauptventilkörperbaugruppe einen axial beweglichen Hauptventilschaft (103) umfasst und zwischen dem linken Ende des Hauptventilschafts (103) und dem Ventilkörper ein Ventilschaft-Rückstellteil vorgesehen ist; die Mitte des Hauptventilschafts (103) sich am Kommunikationskanal zwischen der Bremszylinderkammer und der Hilfsluftzylinderkammer (R) befindet, und das rechte Ende des Hauptventilschafts (103) mit der C-Kolbenbaugruppe in Kontakt steht.

4. Relaisventil nach Anspruch 3, wobei das rechte Ende des Hauptventilschafts (103) mit einem Lufteinlass versehen ist und das rechte Ende des Hauptventilschafts (103) mit der C-Kolbenbaugruppe vermufft ist; der Lufteinlass mit einem Hohlraum innerhalb des Hauptventilschafts (103) in Kommunikation gesetzt ist und der Hohlraum mit einem atmosphärischen Kanal innerhalb des Ventilkörpers in Kommunikation gesetzt ist; der atmosphärische Kanal mit einem Luftauslass (105) am Ventilkörper in Kommunikation gesetzt ist.

5. Relaisventil nach Anspruch 1, wobei die C-Kolbenbaugruppe einen Ablassventilschaft (203) umfasst und das linke Ende des Ablassventilschafts (203) mit einem C-Kolben (202) befestigt ist und das rechte Ende des Ablassventilschafts (203) mit einem Sprungkolben (209) vermufft ist; der Ablassventilschaft (203) mit einem Stopper versehen ist, der fest auf der rechten Seite des Sprungkolbens (209) positioniert ist; zwischen dem C-Kolben (202) und einem Sprungfedersitz (213) Membranplatten I (205) vorgesehen sind, und zwischen dem Sprungkolben (209) und einem Sprungfedersitz (213) Membranplatten I (205) vorgesehen sind; zwischen dem Sprungkolben (209) und dem Sprungfedersitz (213) ein Sprungrückstellteil vorgesehen ist, und der Ablassventilschaft (203), der C-Kolben (202), der Sprungkolben (209), die Membranplatten I (205) und der Sprungfedersitz (213) eine Sprungkammer (Y) bilden, und die Sprungkammer (Y) mit der Vorsteuerkammer in Kommunikation gesetzt ist; die linke Seite des C-Kolbens (202) die Bremszylinderkammer ist, und die Wirkfläche der Sprungkammer (Y) am C-Kolben (202) kleiner ist als die des Sprungkolbens (209).

6. Relaisventil nach Anspruch 1, wobei die Cv-Kolbenbaugruppe einen Cv-Kolben (301) umfasst und das linke Ende des Cv-Kolbens (301) mit einer Membranplatte II (305) in Kontakt steht; die Membranplatte II (305) sich am Membranplattensitz (306) befindet und die Vorsteuerkammer von der linken Seite der Membranplatte II (305) blockiert wird; ein Cv-Rückstellteil zwischen dem rechten Ende des Cv-Kolbens (301) und dem Ventilkörper vorgesehen ist.

7. Relaisventil nach Anspruch 1, wobei der Waagemechanismus einen Waagbalken (212) umfasst und das rechte Ende des Ablassventilschafts (203) mit dem oberen Ende des Waagbalkens (212) zusammenwirkt; die Mitte des Waagbalkens (212) mit dem Drehpunkt einer gewichtsgetriebenen Mechanismusbaugruppe in Kontakt steht und das untere Ende des Waagbalkens (212) mit dem rechten Ende des Cv-Kolbens (301) zusammenwirkt.

8. Relaisventil nach Anspruch 7, wobei das obere Ende des Waagbalkens (212) über eine Torsionsfeder (210) mit dem Ablassventilschaft (203) verbunden ist.

9. Relaisventil nach Anspruch 1, wobei der Ventilkörper mit einer Leer-/Last-Signalkammer (T) versehen ist und die gewichtsgetriebene Mechanismusbaugruppe aus einem gewichtsgetriebenen Kolben (409) besteht; das untere Ende des gewichtsgetriebenen Kolbens (409) die Leer-/Last-Signalkammer (T) blockiert, und der gewichtsgetriebene Kolben (409) mit einer gewichtsgetriebenen Kolbenstange (401) verbunden ist; ein gewichtsgetriebener Rückstellteil zwischen dem gewichtsgetriebenen Kolben (409) und dem Ventilkörper vorgesehen ist, und die gewichtsgetriebene Kolbenstange (401) mit einem vertikal beweglichen Regulierblock (403) verbunden ist; der Regulierblock (403) mit einem Drehpunkt versehen ist.

10. Relaisventil nach Anspruch 9, wobei die gewichtsgetriebene Kolbenstange (401) gleitend mit einer Einstellmutter (405) vermufft ist und die Einstellmutter (405) mit einem einstellbaren Federsitz (404) verschraubt ist; ein gewichtsgetriebener Rückstellteil zwischen dem einstellbaren Federsitz (404) und dem gewichtsgetriebenen Kolben (409) vorgesehen ist.

## Revendications

1. Valve-relais, comprenant un corps de valve, dans laquelle le corps de valve est pourvu d'un ensemble corps de valve principal, d'un ensemble piston C, d'un ensemble piston Cv, d'un ensemble mécanisme entraîné par le poids, d'une chambre de pré-commande, d'une chambre cylindre de frein et d'une chambre cylindre pneumatique auxiliaire (R) ; **caractérisée par** une chambre de pré-commande,
l'ensemble corps de valve principal mobile étant situé au niveau d'un canal de communication entre la chambre cylindre de frein et la chambre cylindre pneumatique auxiliaire (R) ; l'ensemble piston C mobile étant bloqué entre la chambre cylindre de frein et la chambre de pré-commande ;
une extrémité de l'ensemble piston Cv mobile bloquant la chambre de pré-commande ; une extrémité de l'ensemble piston C étant en contact avec le corps de valve principal, et l'autre extrémité de l'ensemble piston C étant en contact avec une extrémité d'un mécanisme d'équilibrage ; l'autre extrémité de l'ensemble piston Cv étant en contact avec l'autre extrémité du mécanisme d'équilibrage.

2. Valve-relais selon la revendication 1, dans laquelle l'ensemble corps de valve principal et l'ensemble piston C sont manchonnés l'un sur l'autre, et la partie manchonnée de l'ensemble corps de valve principal est pourvue d'une entrée d'air ; l'entrée d'air communique avec un espace creux à l'intérieur de l'ensemble corps de valve principal, et l'espace creux communique avec un canal atmosphérique à l'intérieur du corps de valve ; le canal atmosphérique communique avec une sortie d'air sur le corps de valve.

3. Valve-relais selon la revendication 1 ou 2, dans laquelle l'ensemble corps de valve principal comprend une tige de valve principale (103) mobile axialement, et une partie de remise en place de tige de valve est fournie entre l'extrémité gauche de la tige de valve principale (103) et le corps de valve ; le milieu de la tige de valve principale (103) est situé au niveau du canal de communication entre la chambre cylindre de frein et la chambre cylindre pneumatique auxiliaire (R), et l'extrémité droite de la tige de valve principale (103) est en contact avec l'ensemble piston C.

4. Valve-relais selon la revendication 3, dans laquelle l'extrémité droite de la tige de valve principale (103) est pourvue d'une entrée d'air, et l'extrémité droite de la tige de valve principale (103) est manchonnée sur l'ensemble piston C ; l'entrée d'air communique avec un espace creux à l'intérieur de la tige de valve principale (103), et l'espace creux communique avec un canal atmosphérique à l'intérieur du corps de valve ; le canal atmosphérique communique avec une sortie d'air (105) sur le corps de valve.

5. Valve-relais selon la revendication 1, dans laquelle l'ensemble piston C comprend une tige de valve de purge (203), et l'extrémité gauche de la tige de valve de purge (203) est fixée avec un piston C (202), et l'extrémité droite de la tige de valve de purge (203) est manchonnée sur un piston de saut (209) ; la tige de valve de purge (203) est pourvue d'une butée positionnée de manière fixe sur le côté droit du piston de saut (209) ; des plaques de diaphragme I (205) sont fournies entre le piston C (202) et un siège de ressort de saut (213), et des plaques de diaphragme I (205) sont fournies entre le piston de saut (209) et un siège de ressort de saut (213) ; une partie de remise en place de saut est fournie entre le piston de saut (209) et le siège de ressort de saut (213), et la tige de valve de purge (203), le piston C (202), le piston de saut (209), les plaques de diaphragme I (205) et le siège de ressort de saut (213) forment une chambre de saut (Y), et la chambre de saut (Y) communique avec la chambre de pré-commande ; le côté gauche du piston C (202) est la chambre cylindre de frein, et la zone d'action de la chambre de saut (Y) sur le piston C (202) est plus petite que celle du piston de saut (209).

6. Valve-relais selon la revendication 1, dans laquelle l'ensemble piston Cv comprend un piston Cv (301), et l'extrémité gauche du piston Cv (301) est en contact avec une plaque de diaphragme II (305) ; la plaque de diaphragme II (305) est située sur le siège de plaque de diaphragme (306), et la chambre de pré-commande est bloquée par le côté gauche de la plaque de diaphragme II (305) ; une partie de remise en place Cv est fournie entre l'extrémité droite du piston Cv (301) et le corps de valve.

7. Valve-relais selon la revendication 1, dans laquelle le mécanisme d'équilibrage comprend une poutre d'équilibrage (212), et l'extrémité droite de la tige de valve de purge (203) agit avec l'extrémité supérieure de la poutre d'équilibrage (212) ; le milieu de la poutre d'équilibrage (212) est en contact avec le pivot d'un ensemble mécanisme entraîné par le poids, et l'extrémité inférieure de la poutre d'équilibrage (212) agit avec l'extrémité droite du piston Cv (301).

8. Valve-relais selon la revendication 7, dans laquelle l'extrémité supérieure de la poutre d'équilibrage (212) est reliée à la tige de valve de purge (203) par un ressort de torsion (210).

9. Valve-relais selon la revendication 1, dans laquelle le corps de valve est pourvu d'une chambre de signal de vide/charge (T), et l'ensemble mécanisme entraîné par le poids se compose d'un piston entraîné par le poids (409) ; l'extrémité inférieure du piston entraîné par le poids (409) bloque la chambre de signal de vide/charge (T), et le piston entraîné par le poids (409) est relié à une tige de piston entraîné par le poids (401) ; une partie de remise en place entraînée par le poids est fournie entre le piston entraîné par le poids (409) et le corps de valve, et la tige de piston entraîné par le poids (401) est reliée à un bloc de régulation (403) mobile verticalement ; le bloc de régulation (403) est pourvu d'un pivot.

10. Valve-relais selon la revendication 9, dans laquelle la tige de piston entraîné par le poids (401) est manchonnée de manière glissante sur un écrou de réglage (405), et l'écrou de réglage (405) est fileté avec un siège de ressort réglable (404) ; une partie de remise en place entraînée par le poids est fournie entre le siège de ressort réglable (404) et le piston entraîné par le poids (409).
